# EUROPEAN PATENT SPECIFICATION

(11) **EP 2 448 300 B1**
(45) Date of publication and mention of the grant of the patent: **26.02.2020**
(21) Application number: 10840520.0
(22) Date of filing: 20.12.2010
(51) Int. Cl.: H04W 8/18, H04L 29/06

(54) **SERVICE TRIGGER METHOD, SERVICE BROKER AND SERVICE TRIGGER SYSTEM**
DIENSTAUSLÖSUNGSVERFAHREN, DIENST-BROKER UND DIENSTAUSLÖSUNGSSYSTEM
PROCÉDÉ DE DÉCLENCHEMENT DE SERVICES, COURTIER EN SERVICES ET SYSTÈME DE DÉCLENCHEMENT DE SERVICES

(30) Priority: 29.12.2009 CN 200910258871
(43) Date of publication of application: 02.05.2012
(73) Proprietor: Huawei Technologies Co., Ltd., Longgang District Shenzhen, Guangdong 518129 (CN)
(72) Inventor: QI, Jiang, Shenzhen Guangdong 518129 (CN)
(74) Representative: Pfenning, Meinig & Partner mbB
(86) International application number: PCT/CN2010/079982
(87) International publication number: WO 2011/079731

(56) References cited:
- CN-A- 101 207 928
- US-A1- 2007 086 582
- US-A1- 2007 086 582
- US-A1- 2007 088 836

## Description

### FIELD OF THE INVENTION

The present invention relates to the field of communications technologies, and in particular, to a service triggering method, a service broker, and a service triggering system.

### BACKGROUND OF THE INVENTION

As the next generation telecommunication network architecture, the IP multimedia subsystem (IP Multimedia Subsystem, IMS) is a multi-service application architecture. When applying multiple services, the IMS inevitably causes the problem of synergy and consistency among the multiple services. In order to effectively control and deal with the problem of synergy and consistency existing in the interaction of multiple services in the IMS, the 3GPP introduces a new network element in the IMS architecture - a service capability interaction manager (Service Capability Interaction Manager, SCIM) device, that is, a service broker (Service Broker), which is specifically responsible for coordinating the operation of the services.

In the prior art, for a call triggered at the network side, the service broker sequentially triggers multiple different services and then routes the services to the called terminal; or sequentially triggers the first several services for the call triggered at the network side and then routes these services to the called terminal without triggering other subsequent services.

For example, a subscriber is both a company employee and a family member, has multiple terminals, such as a mobile phone, a family fixed-line telephone, and a personal computer (PC) soft terminal, and may call multiple called terminals simultaneously. The
subscriber has subscribed to both the company universal personal telecommunication service and the family universal personal telecommunication service. The subscriber binds the company universal personal telecommunication service to the mobile phone and a company soft terminal, and binds the family universal personal telecommunication service to the family fixed-line telephone and the personal soft terminal. When the network triggers a call to the subscriber, the service broker triggers the company universal personal telecommunication service and routes the company universal personal telecommunication service to the subscriber's mobile phone or company soft terminal, or the service broker sequentially triggers the company universal personal telecommunication service and the family universal personal telecommunication service, and then routes the services to the personal soft terminal or the family fixed-line telephone.

During the process of implementing the present invention, the prior art has at least the following defect: The network needs to retrigger the call for routing to another terminal, which makes it impossible to raise the service triggering efficiency.

US patent application US2007/086582 A1 and US patent application US2007/0088836 A1 describes a IMS provides (IMS) provides mobile and fixed multimedia services. The aim of IMS is not only to provide new services, but also all of the services, current and future, that the Internet provides. In this way, IMS gives network operators and service providers the ability to control and charge for each service. In addition, users are given the ability to execute services from their home networks, as well as when the users are roaming.

### SUMMARY OF THE INVENTION

Embodiments of the present invention provide a service triggering method, a service broker, and a service triggering system, in order to raise service triggering efficiency.

An embodiment of the present invention provides a service triggering method, when a call triggered from a calling terminal is routed to a called terminal, querying(11), by a service broker, service subscription data of a called subscriber of the call
according to information about the called subscriber carried in the call , characterized by including:
obtainning an un-triggered service in services subscribed by the called subscriber; and
obtaining a service key from the call; and
finding out, by the service broker according to the service key, a corresponding call derivation switch that is used for indicating whether to derive a call or not, from service configuration information; and
generating, by the service broker, a new call to trigger the un-triggered service, the new call is routed to a terminal to which the un-triggered service is bound;
the generating, by the service broker, the new call comprises:
   generating, by the service broker, the new call under a condition that the call derivation switch indicates that the call is to be derived..

An embodiment of the present invention further provides a service broker, include a querying module(61), configured to query service subscription data of a called subscriber of a call according to information about the called subscriber carried in the call when the call triggered from a calling terminal is routed to a called terminal, characterized by including:
the querying module, further configured to obtain an un-triggered service in services subscribed by the subscriber; and
a service key obtaining module(63), configured to obtain a service key from the call;
a switch finding module(64), configured to find out, according to the service key, a corresponding call derivation switch that is used for indicating whether to derive a call or not, from service configuration information; wherein
a triggering module, configured to generate a new call to trigger the un-triggered service, the new call is routed to a terminal to which the un-triggered service is bound;
the triggering module(62) is specifically configured to generate the new call under a condition that the call derivation switch indicates that the call is to be derived..

An embodiment of the present invention further provides a service triggering system, including the service broker.

According to the foregoing embodiments, when a call is routed to a called terminal in the midway of the call, a new call is generated to trigger a subsequent service, so that the subsequent service can be triggered after the call is routed to a subscriber's terminal in the midway, thereby reducing the implementation complexity and improving service triggering efficiency.

The technical solutions of the present invention are hereinafter described in detail with reference to the accompanying drawings and embodiments.

### BRIEF DESCRIPTION OF THE DRAWINGS

FIG. 1 is a flowchart of a service triggering method according to an embodiment of the present invention;
FIG. 2 is a schematic structural diagram applied in a service triggering method according to an embodiment of the present invention;
FIG. 3 is a flowchart of another service triggering method according to an embodiment of the present invention;
FIG. 4 is a flowchart of still another service triggering method according to an embodiment of the present invention;
FIG. 5 is a flowchart of still another service triggering method according to an embodiment of the present invention;
FIG. 6 is a schematic structural diagram of a service broker according to an embodiment of the present invention;
FIG. 7 is a schematic diagram of a process that a service broker routes a call to a called terminal in the midway according to an embodiment of the present invention; and
FIG. 8 is a schematic structural diagram of a service triggering system according to an embodiment of the present invention.

### DETAILED DESCRIPTION OF THE EMBODIMENTS

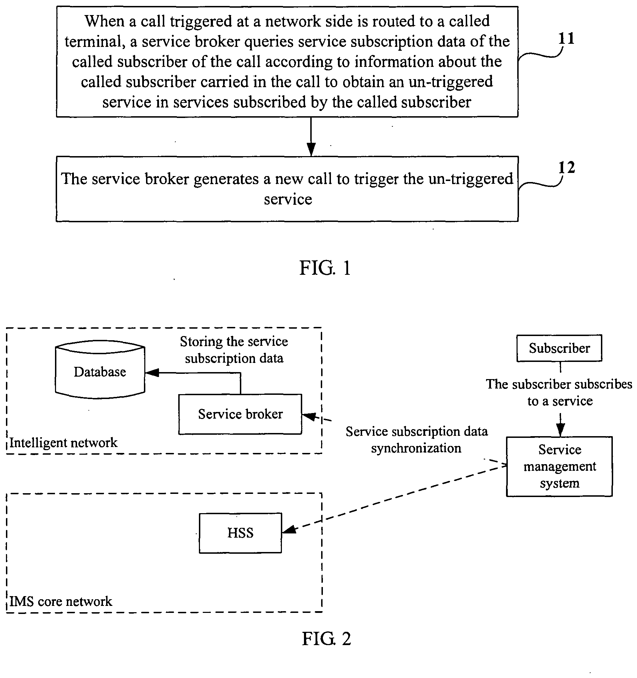

FIG. 1 is a flowchart of a service triggering method according to an embodiment of the present invention. The method includes the following steps:
Step 11: When a call triggered at a network side is routed to a called terminal, a service broker queries service subscription data of the called subscriber of the call according to information about the called subscriber carried in the call to obtain an un-triggered service in services subscribed by the called subscriber.

For a call triggered by a core network, the service broker triggers a service subscribed by the subscriber. It is assumed that the called subscriber of the call subscribes to two services, when a previous service is triggered and the call is routed to a terminal to which the previous service is bound, the service broker queries the service subscription data of the called subscriber according to the information about the called subscriber carried in the call to obtain another service that is subscribed by the subscriber and not triggered by the call.

Step 12: The service broker generates a new call to trigger the un-triggered service.

The service broker generates a call to trigger another service that is subscribed by the called subscriber and not triggered by the call. Then, the new call is routed to a terminal to which the un-triggered service is bound.

The service broker routes (Forward) the call to the called terminal to which a subsequent service is bound.

In this embodiment, the service broker queries the service subscription data of the called subscriber and generates the new call to trigger a subsequent un-triggered service, so that the call can be routed to a called terminal of a current service, and a subsequent service can also be triggered, so as to implement that the call is routed to the called terminal in a midway.

The service triggering method according to this embodiment of the present invention may also include:
obtaining a service key from the call; and
finding out, by the service broker according to the service key, a corresponding call derivation switch that is used for indicating whether to derive a call or not, from service configuration information.

At this time, in step 12, generating the new call by the service broker may include:
generating, by the service broker, the new call under a condition that the call derivation switch indicates that a call is to be derived.

The service configuration information may be a table structure, and a primary key is a service key. A format of the service configuration information may be as shown in Table 1.

**Table 1**

| Service Key | Call Derivation Switch |
|---|---|
| First service key | On |
| Second service key | Off |
| ... | ... |

In practical applications, some services need to derive calls and some services do not need to derive a call. The service broker may distinguish the services through the call derivation switch in the service configuration information according to foreseeable service characteristics. For example, if the call derivation switch of the first service key is set to be on, generation of a new call is triggered; and if the call derivation switch of the second service key is set to be off, no generation of a new call is triggered.

The service broker may obtain the service key from received call initial signaling, and find the corresponding call derivation switch from the service configuration information by using the obtained service key.

In step 11, the service subscription data may be stored in a home subscriber server (Home Subscriber Server, HSS) of an IMS core network. Because the called subscriber is determined at runtime, and the service broker is generally deployed in an intelligent network communicates with an intelligent network service by using a call control protocol such as SIP, communicates with the HSS of the IMS core network by using an Sh/Dh interface, and communicates with an S-CSCF by using an ISC interface, the service broker may use the Sh interface to query the service subscription data of a current subscriber from the HSS. At this time, in step 11, querying the service subscription data of the called subscriber of the call by the service broker according to the information about the called subscriber carried in the call may include:
querying, by the service broker, the service subscription data of the called subscriber from the HSS according to the information about the called subscriber carried in the call. Querying the service subscription data may be performed immediately after the call triggers the service broker for the first time, and is not limited to the invoking time in the example.

In order to avoid accessing the HSS multiple times for one call, the service broker may use buffering technologies to store a certain amount of accessed service subscription data. At this time, in step 11, querying the service subscription data of the called subscriber of the call by the service broker according to the information about the called subscriber carried in the call may include:
querying, by the service broker according to the information about the called subscriber carried in the call, the service subscription data of the called subscriber from service subscription data stored by the service broker itself. The service broker stores the service subscription data of subscribers, so that querying the service subscription data may be executed locally, thereby further improving processing efficiency and saving calling time in service triggering.

The service triggering method according to this embodiment of the present invention may also include:
updating, by the service broker, the stored service subscription data.

As shown in FIG. 2, when a buffer cache of the service broker is full, conventional buffer cache updating technologies may also be used to overwrite old and less frequently accessed service subscription data with the new service subscription data. Another optional scheme for the service broker to obtain the service subscription data is that when a subscriber subscribes to a service, a service management system synchronizes the service subscription data to the service broker.

At this time, in step 11, querying the service subscription data of the called subscriber of the call by the service broker according to the information about the called subscriber carried in the call may include:
querying, by the service broker, the service subscription data of the called subscriber from the stored and updated service subscription data according to the information about the called subscriber carried in the call.

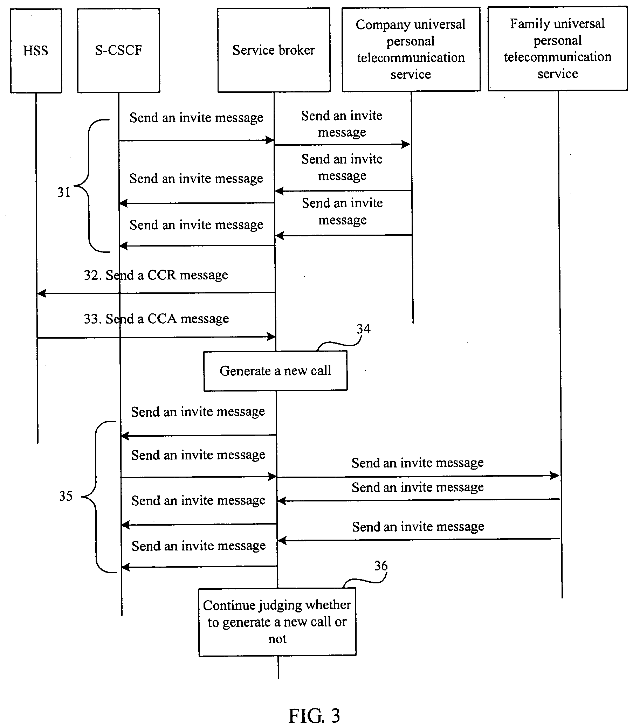

FIG 3 is a flowchart of another service triggering method according to an embodiment of the present invention. In this embodiment, an IMS core network triggers an intelligent network by a call, and a service key is carried in SIP signaling; and a same Call-ID header value is used between a service broker and an intelligent network service to complete uplink and downlink session association. Specifically, the method includes the following steps:
Step 31: A company universal personal telecommunication service is triggered through an invite (invite) message, and the service is routed to a subscriber's mobile phone. The invite message sent by an S-CSCF to the service broker includes a subscriber identifier (R-URI) and a company service key (Service-Key); the invite message sent by the service broker to the company universal personal telecommunication service includes a subscriber identifier and a Call-ID: 123; the invite message returned by the company universal personal telecommunication service to the service broker includes the company soft terminal number (R-URI), the mobile phone number of the subscriber, and the Call-ID: 123; and the invite message returned by the service broker to the S-CSCF includes a company soft terminal number and a mobile phone number of a subscriber.
Step 32: The service broker sends, to an HSS, a credit control request (Credit Control Request, CCR) message carrying the subscriber identifier, so as to obtain the service subscription data of the subscriber to which the subscriber identifier belongs.
Step 33: The HSS returns a credit control answer (Credit Control Answer, CCA) message carrying the service subscription data, and the service broker obtains information about remaining services of the subscriber that are not yet triggered.
Step 34: The service broker searches for service configuration information according to the company service key in the invite message sent by the S-CSCF and obtains a call derivation switch corresponding to the company service key. Under a condition that the call derivation switch is set to be on, a new call is generated to trigger the information about the remaining services of the subscriber that are not yet triggered, such as a family universal personal telecommunication service.
Step 35: The family universal personal telecommunication service is triggered through an invite message according to the new call generated by the service broker. The invite message sent by the service broker to the S-CSCF includes a subscriber identifier; the invite message sent by the S-CSCF to the service broker includes a subscriber identifier and a family service key; the invite message sent by the service broker to the family universal personal telecommunication service includes a subscriber identifier and a Call-ID: 456; the invite message returned by the family universal personal telecommunication service to the service broker includes a family terminal number, a family fixed-line telephone number, and the Call-ID: 456; and the invite message returned by the service broker to the S-CSCF includes the family terminal number and the family fixed-line telephone number.
Step 36: After the family universal personal telecommunication service is triggered, the service subscription data that is buffered internally is queried according to the subscriber identifier. If the subscriber has other services that are not triggered, similarly to step 34, firstly it is judged whether the call derivation switch corresponding to the family service key allows to continue generating a new call, and then subsequent operations are executed according to a judgment result.

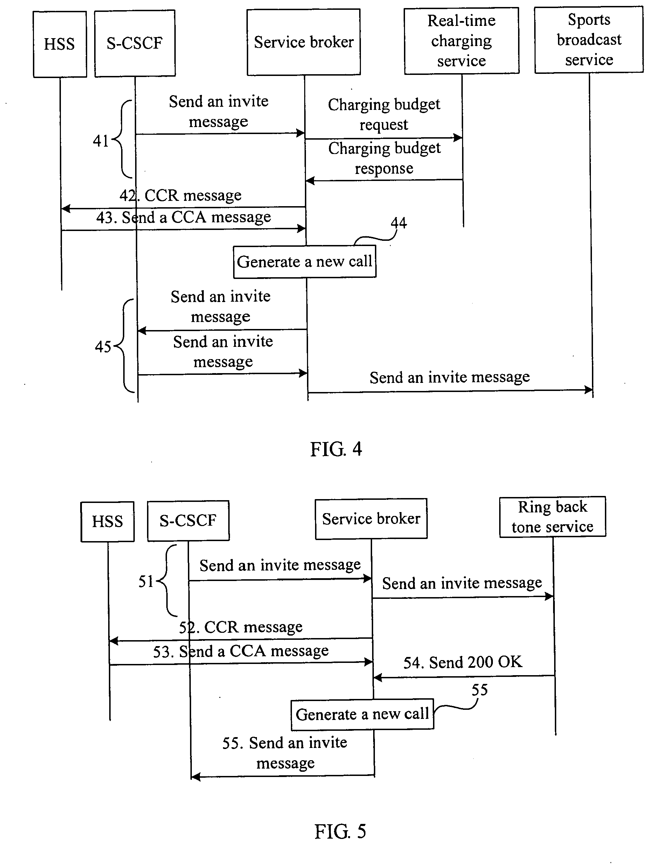

FIG 4 is a flowchart of still another service triggering method according to an embodiment of the present invention. This embodiment is a combination of a certain real-time charging service and a sports broadcast service. The charging service has no call control capability, and a call derivation switch corresponding to the service may be set to be on, so that the service broker completes the charging service and generates a service triggering call of a subsequent broadcast service. Specifically, the method includes the following steps:
Step 41: The real-time charging service is triggered through an invite message. The S-CSCF sends an invite message including a subscriber identifier and a charging service key to the service broker; after receiving the invite message, the service broker sends a charging budget request; and after receiving the charging budget request, the real-time charging service completes charging and returns a charging budget response.
Step 42: The service broker sends, to an HSS, a CCR message carrying the subscriber identifier, so as to obtain service subscription data of a subscriber to which the subscriber identifier belongs.
Step 43: The HSS returns a CCA message carrying the service subscription data, and the service broker obtains information about remaining services of the subscriber that are not yet triggered, that is, the sports broadcast service.
Step 44: The service broker searches for service configuration information according to the charging service key in the invite message sent by the S-CSCF and obtains the call derivation switch corresponding to the charging service key. Under a condition that the call derivation switch is set to be on, a new call is generated to trigger the sports broadcast service of the subscriber that is not yet triggered.
Step 45: The sports broadcast service is triggered through an invite message according to the new call generated by the service broker. The invite message sent by the service broker to the S-CSCF includes the subscriber identifier; the invite message sent by the S-CSCF to the service broker includes the subscriber identifier and a broadcast service key; and the invite message sent by the service broker to a family universal personal telecommunication service includes the subscriber identifier and a Call-ID: xxx.

FIG 5 is a flowchart of still another service triggering method according to an embodiment of the present invention. In this embodiment, a ring back tone service only plays tones and is not responsible for call connection, and a call derivation switch may be set for the service, so that a service broker can complete call derivation of the call connection, that is, in addition to the triggering of a ring back tone service, a call derivation function of the service broker may also be used for any scenario in which a service broker acts as a service to route a downlink call, and scenarios may be expanded flexibly through different values of the call derivation switch. Specifically, the method includes the following steps:
Step 51: The ring back tone service is triggered through an invite message. An S-CSCF sends an invite message including a subscriber identifier and a ring back tone service key to the service broker; and the service broker sends an invite message including a subscriber identifier and a Call-ID: xxx to the ring back tone service to trigger the ring back tone service.
Step 52: The service broker sends, to an HSS, a CCR message carrying the subscriber identifier, so as to obtain service subscription data of a subscriber to which the subscriber identifier belongs.
Step 53: The HSS returns a CCA message carrying the service subscription data, and the service broker obtains information about remaining services of the subscriber that are not yet triggered.
Step 54: The ring back tone service returns a response message (200 OK) including the Call-ID: xxx.
Step 55: The service broker searches for service configuration information according to the ring back tone service key in the invite message sent by the S-CSCF and obtains a call derivation switch corresponding to the ring back tone service key. Under a condition that the call derivation switch is set to be on, a new call is generated to send an invite message including the subscriber identifier to the S-CSCF and trigger the remaining services of the subscriber that are not yet triggered.

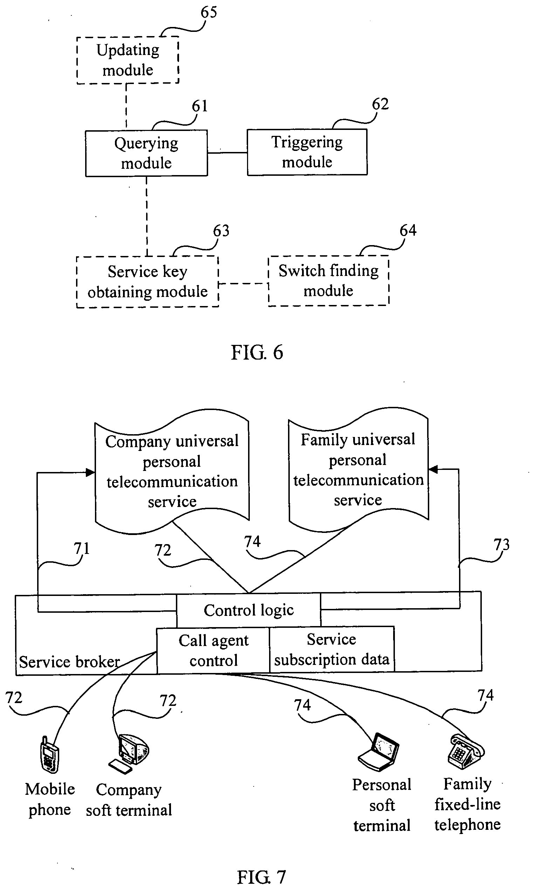

FIG 6 is a schematic structural diagram of a service broker according to an embodiment of the present invention. The service broker includes: a querying module 61 and a triggering module 62. The querying module 61 is configured to query service subscription data of a called subscriber of a call according to information about the called subscriber carried in the call when the call triggered at a network side is routed to a called terminal, to obtain an un-triggered service in services subscribed by a subscriber. The triggering module 62 is configured to generate a new call to trigger the un-triggered service.

In this embodiment, the service broker queries the service subscription data of the called subscriber and generates the new call to trigger a subsequent un-triggered service, so that the call can be routed to a called terminal of a current service, a subsequent service can also be triggered, thereby improving the service triggering efficiency.

The service broker according to this embodiment of the present invention may further include: a service key obtaining module 63 and a switch finding module 64. The service key obtaining module 63 is configured to obtain a service key from the call; and the switch finding module 64 is configured to find out, according to the service key, a corresponding call derivation switch that is used for indicating whether to derive a call or not, from service configuration information; At this time, the triggering module 62 is specifically configured to generate a new call under a condition that the call derivation switch indicating to derive a call.

The querying module 61 may be specifically configured to query the service subscription data of the called subscriber from an HSS according to the information about the called subscriber carried in the call; or may be specifically configured to query, according to the information about the called subscriber carried in the call, the service subscription data of the called subscriber from service subscription data stored by the querying module itself, so that querying the service subscription data may be executed locally, thereby further improving processing efficiency and saving calling time in service triggering.

The service broker according to the embodiment of the present invention may also include: an updating module 65. The updating module 65 is configured to update the stored service subscription data. At this time, the querying module 61 may be specifically configured to query, according to the information about the called subscriber carried in the call, the service subscription data of the called subscriber from the stored and updated service subscription data.

Firstly, the service broker serving as a signaling access point of an intelligent network services is used to forward the call of the services triggered by the core network or forward the call of the called terminal routed by the service; and secondly, the service subscription data stored by the service broker is used to query, through an internal interface of a system, whether a subscriber call needs to trigger a subsequent service.

With a certain subscriber as an example, it is assumed that the subscriber is both a company employee and a family member, has multiple terminals, such as a mobile phone, a family fixed-line telephone, and a personal computer (PC) soft terminal, and may call multiple called terminals simultaneously. The subscriber subscribes to both a company universal personal telecommunication service and a family universal personal telecommunication service. The subscriber binds the company universal personal telecommunication service to the mobile phone and a company soft terminal, and binds the family universal personal telecommunication service to the family fixed-line telephone and the personal soft terminal. FIG. 7 is a schematic diagram of a process that a service broker routes a call to a called terminal in the midway according to an embodiment of the present invention. An initial message triggered.at a network side is not shown in FIG 7, and only a subsequent call process that a service triggers and routes to the called terminal is described. As shown in FIG. 7, the following is specifically included:
Step 71: A network side triggers a call and a service broker triggers a service subscribed by a subscriber.
Step 72: It is assumed that a company universal personal telecommunication service is triggered firstly, the service routes the call to the mobile phone and the company soft terminal of the subscriber respectively, and the two calls both are forwarded by control logic of a derived service, where the control logic is used for triggering calls.
Step 73: The control logic of the derived service queries, according to the information about the called subscriber carried in the call, service subscription data stored in the service broker, and judges whether a subsequent service is required to be triggered or not, where the control logic is used for triggering calls. If the called subscriber also subscribes to other services, the subsequent service is required to be triggered; otherwise, the process ends. In this example, the called subscriber also subscribes to a family universal personal telecommunication service, and the control logic of the derived service newly generates a call to trigger the service, where the control logic is used for triggering calls.
Step 74: The family universal personal telecommunication service routes the call to a fixed-line telephone and a personal soft terminal of the called subscriber respectively, where the two calls both are forwarded by the control logic of the derived service , where the control logic is used for triggering calls.

Subsequently, similar to step 72 and step 73, it is judged whether a subsequent service is required to be triggered or not. If the called subscriber subscribes to a third service, a new call is generated to trigger the third service; otherwise, the processing ends. In this example, the service broker does not need to trigger a subsequent service, and all service triggering processing ends by now.

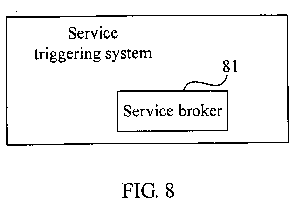

FIG. 8 is a schematic structural diagram of a service triggering system according to an embodiment of the present invention. The system includes a service broker 81 having a function of generating a new call, which may be any one of the service brokers provided in the foregoing device embodiments.

By generating a new call, the foregoing method, device, and system embodiments can route the call to a called terminal of a current service, and can also trigger a subsequent service, thereby improving service triggering efficiency. And for an intelligent network service, a service broker and an IMS core network each may serve as a signaling access point and each may store service subscription data. Therefore, the service broker's function of generating the new call may also serve as a supplementary service of the IMS core network, and a service triggering process is the same as a scheme provided in the foregoing method embodiments.

Persons of ordinary skill in the art may understand that all or part of steps in the above method embodiments may be implemented by a program instructing relevant hardware. The program may be stored in a computer readable storage medium, and when the program is executed, the steps of the above method embodiments may be included; and the foregoing storage medium may be any medium capable of storing program codes, such as a read only memory (ROM), a random access memory (RAM), a magnetic disk, and a compact disk-read only memory (CD-ROM).

Finally, it should be noted that the above embodiments are only used for describing the technical solutions of the present invention instead of limiting the technical solutions of the present invention. Although the present invention is described in detail with reference to the foregoing embodiments, persons of ordinary skill in the art should understand that they can still make modifications to the technical solutions described in the foregoing embodiments or make equivalent replacements to some technical features of the embodiments, and those modifications or replacement cannot make the essence of the corresponding technical solutions depart from the scope of the technical solutions of the embodiments of the present invention as defined by the appended claims.

## Claims

1. A service triggering method, comprising when a call triggered from a calling terminal is routed to a called terminal, querying(11), by a service broker, service subscription data of a called subscriber of the call according to information about the called subscriber carried in the call , **characterized by** comprising:
obtaining an un-triggered service in the services subscribed to by the called subscriber; and
obtaining a service key from the call; and
finding out, by the service broker according to the service key, a corresponding call derivation switch that is used for indicating whether to derive a call or not, from service configuration information; and
generating(12), by the service broker, a new call to trigger the un-triggered service, the new call is routed to one or more terminals to which the un-triggered service is bound;
the generating, by the service broker, of the new call comprises:
generating, by the service broker, the new call under a condition that the call derivation switch indicates that the call is to be derived.

2. The service triggering method according to claim 1, wherein the querying, by the service broker, the service subscription data of the called subscriber of the call according to the information about the called subscriber carried in the call comprises:
querying, by the service broker, the service subscription data of the called subscriber from a home subscriber server according to the information about the called subscriber carried in the call.

3. The service triggering method according to claim 1, wherein:
the querying, by the service broker, the service subscription data of the called subscriber of the call according to the information about the called subscriber carried in the call comprises:
querying, by the service broker according to the information about the called subscriber carried in the call, the service subscription data of the called subscriber from service subscription data stored by the service broker itself.

4. The service triggering method according to claim 3, wherein the method further comprises:
updating, by the service broker, the stored service subscription data; and
the querying, by the service broker, the service subscription data of the called subscriber of the call according to the information about the called subscriber carried in the call comprises:
querying, by the service broker, the service subscription data of the called subscriber from the stored and updated service subscription data according to the information about the called subscriber carried in the call.

5. A service broker, comprising a querying module(61), configured to query service subscription data of a called subscriber of a call according to information about the called subscriber carried in the call when the call triggered from a calling terminal is routed to a called terminal, **characterized by** comprising:
the querying
module(61), further configured to obtain an un-triggered service in services subscribed by the called subscriber; and
a service key obtaining module(63), configured to obtain a service key from the call;
a switch finding module(64), configured to find out, according to the service key, a corresponding call derivation switch that is used for indicating whether to derive a call or not, from service configuration information; wherein
a triggering module(62), configured to generate a new call to trigger the un-triggered service, the new call is routed to one or more terminals to which the un-triggered services is bound;
the triggering module(62) is specifically configured to generate the new call under a condition that the call derivation switch indicates that the call is to be derived.

6. The service broker according to claim 5, wherein the querying module(61) is specifically configured to query the service subscription data of the called subscriber from a home subscriber server according to the information about the called subscriber carried in the call.

7. The service broker according to claim 5, wherein the querying module(61) is specifically configured to query, according to the information about the called subscriber carried in the call, the service subscription data of the called subscriber from service subscription data stored by the querying module(61) itself.

8. The service broker according to claim 7, further comprising:
an updating module(65), configured to update the stored service subscription data; wherein
the querying module(61) is specifically configured to query the service subscription data of the called subscriber from the stored and updated service subscription data according to the information about the called subscriber carried in the call.

9. A service triggering system, comprising the service broker(81) according to any one of claims 5 to 8.

## Patentansprüche

1. Dienstauslöseverfahren, umfassend:
Abfragen (11) durch einen Dienst-Broker, wenn ein Ruf, der von einem rufenden Endgerät ausgelöst wird, zu einem gerufenen Endgerät geleitet wird, von Dienstabonnementdaten eines gerufenen Teilnehmers des Rufs gemäß Informationen über den gerufenen Teilnehmer, die im Ruf übertragen werden,
**dadurch gekennzeichnet, dass** es umfasst:
Erhalten eines nicht ausgelösten Dienstes in den vom gerufenen Teilnehmer abonnierten Diensten; und
Erhalten eines Dienstschlüssels aus dem Ruf; und
Ermitteln eines entsprechenden Rufableitungsschalters, der zum Anzeigen verwendet wird, ob ein Ruf abgeleitet werden soll oder nicht, durch den Dienst-Broker gemäß dem Dienstschlüssel aus Dienstkonfigurationsinformationen;
Erzeugen (12) eines neuen Rufs durch den Dienst-Broker zum Auslösen des nicht ausgelösten Dienstes, wobei der neue Ruf zu einem oder mehreren Endgeräten geleitet wird, an welche der nicht ausgelöste Dienst gebunden ist;
wobei das Erzeugen des neuen Rufs durch den Dienst-Broker umfasst:
Erzeugen des neuen Rufs durch den Dienst-Broker unter einer Bedingung, dass der Rufableitungsschalter anzeigt, dass der Ruf abgeleitet werden soll.

2. Dienstauslöseverfahren nach Anspruch 1, wobei das Abfragen der Dienstabonnementdaten des gerufenen Teilnehmers des Rufs durch den Dienst-Broker gemäß den im Ruf übertragenen Informationen über den gerufenen Teilnehmer umfasst:
Abfragen der Dienstabonnementdaten des gerufenen Teilnehmers durch den Dienst-Broker von einem Heimat-Teilnehmerserver gemäß den im Ruf übertragenen Informationen über den gerufenen Teilnehmer.

3. Dienstauslöseverfahren nach Anspruch 1, wobei:
das Abfragen der Dienstabonnementdaten des gerufenen Teilnehmers des Rufs durch den Dienst-Broker gemäß den im Ruf übertragenen Informationen über den gerufenen Teilnehmer umfasst:
Abfragen der Dienstabonnementdaten des gerufenen Teilnehmers aus Dienstabonnementdaten, die vom Dienst-Broker selbst gespeichert werden, durch den Dienst-Broker gemäß den im Ruf übertragenen Informationen über den gerufenen Teilnehmer.

4. Dienstauslöseverfahren nach Anspruch 3, wobei das Verfahren ferner umfasst:
Aktualisieren der gespeicherten Dienstabonnementdaten durch den Dienst-Broker;
wobei das Abfragen der Dienstabonnementdaten des gerufenen Teilnehmers des Rufs durch den Dienst-Broker gemäß den im Ruf übertragenen Informationen über den gerufenen Teilnehmer umfasst:
Abfragen der Dienstabonnementdaten des gerufenen Teilnehmers durch den Dienst-Broker aus den gespeicherten und aktualisierten Dienstabonnementdaten gemäß den im Ruf übertragenen Informationen über den gerufenen Teilnehmer.

5. Dienst-Broker, umfassend:
ein Abfragemodul (61), das so konfiguriert ist, dass es Dienstabonnementdaten eines gerufenen Teilnehmers eines Rufs gemäß Informationen über den gerufenen Teilnehmer, die im Ruf übertragen werden, abfragt, wenn der Ruf, der von einem rufenden Endgerät ausgelöst wird, zu einem gerufenen Endgerät geleitet wird, **dadurch gekennzeichnet, dass** er umfasst:
das Abfragemodul (61), das ferner zum Erhalten eines nicht ausgelösten Dienstes in vom gerufenen Teilnehmer abonnierten Diensten konfiguriert ist; und
ein Dienstschlüsselerhaltungsmodul (63), das zum Erhalten eines Dienstschlüssels aus dem Ruf konfiguriert ist;
ein Schaltersuchmodul (64), das so konfiguriert ist, dass es einen entsprechenden Rufableitungsschalter, der zum Anzeigen verwendet wird, ob ein Ruf abgeleitet werden soll oder nicht, gemäß dem Dienstschlüssel aus Dienstkonfigurationsinformationen ermittelt, wobei
ein Auslösemodul (62), das zum Erzeugen eines neuen Rufs konfiguriert ist, den nicht ausgelösten Dienst auslöst, wobei der neue Ruf zu einem oder mehreren Endgeräten geleitet wird, an welche die nicht ausgelösten Dienste gebunden sind;
das Auslösemodul (62) insbesondere so konfiguriert ist, dass es den neuen Ruf unter einer Bedingung erzeugt, dass der Rufableitungsschalter anzeigt, dass der Ruf abgeleitet werden soll.

6. Dienst-Broker nach Anspruch 5, wobei das Abfragemodul (61) insbesondere zum Abfragen der Dienstabonnementdaten des gerufenen Teilnehmers des Rufs von einem Heimat-Teilnehmerserver gemäß den im Ruf übertragenen Informationen über den gerufenen Teilnehmer konfiguriert ist.

7. Dienst-Broker nach Anspruch 5, wobei das Abfragemodul (61) insbesondere zum Abfragen der Dienstabonnementdaten des gerufenen Teilnehmers aus Dienstabonnementdaten, die vom Abfragemodul (61) selbst gespeichert werden, gemäß den im Ruf übertragenen Informationen über den gerufenen Teilnehmer konfiguriert ist.

8. Dienst-Broker nach Anspruch 7, ferner umfassend:
ein Aktualisierungsmodul (65), das zum Aktualisieren der gespeicherten Dienstabonnementdaten konfiguriert ist; wobei
das Abfragemodul (61) insbesondere zum Abfragen der Dienstabonnementdaten des gerufenen Teilnehmers aus den gespeicherten und aktualisierten Dienstabonnementdaten gemäß den im Ruf übertragenen Informationen über den gerufenen Teilnehmer konfiguriert ist.

9. Dienstauslösesystem, umfassend den Dienst-Broker (81) nach einem der Ansprüche 5 bis 8.

## Revendications

1. Procédé de déclenchement de services, comprenant
lorsqu'un appel déclenché à partir d'un terminal appelant est acheminé vers un terminal appelé, l'interrogation (11), par un courtier en services, de données d'abonnement à des services d'un abonné appelé de l'appel en fonction d'informations sur l'abonné appelé contenues dans l'appel,
**caractérisé par le fait qu'**il comprend :
l'obtention d'un service non déclenché dans les services auxquels l'abonné appelé a souscrit ; et
l'obtention d'une clé de service à partir de l'appel ; et
le fait de trouver, par le courtier en services en fonction de la clé de service, un commutateur de dérivation d'appel correspondant qui est utilisé pour indiquer s'il faut dériver un appel ou non, à partir d'informations de configuration de service ; et
la génération (12), par le courtier en services, d'un nouvel appel pour déclencher le service non déclenché, le nouvel appel étant acheminé vers un ou plusieurs terminaux auxquels le service non déclenché est lié ;
la génération, par le courtier en services, du nouvel appel comprenant :
la génération, par le courtier en services, du nouvel appel sous réserve que le commutateur de dérivation d'appel indique que l'appel doit être dérivé.

2. Procédé de déclenchement de services selon la revendication 1, l'interrogation, par le courtier en services, des données d'abonnement à des services de l'abonné appelé de l'appel en fonction des informations sur l'abonné appelé contenues dans l'appel comprenant :
l'interrogation, par le courtier en services, des données d'abonnement à des services de l'abonné appelé à partir d'un serveur d'abonné domestique en fonction des informations sur l'abonné appelé contenues dans l'appel.

3. Procédé de déclenchement de services selon la revendication 1,
l'interrogation, par le courtier en services, des données d'abonnement à des services de l'abonné appelé de l'appel en fonction des informations sur l'abonné appelé contenues dans l'appel comprenant :
l'interrogation, par le courtier en services en fonction des informations sur l'abonné appelé contenues dans l'appel, des données d'abonnement à des services de l'abonné appelé à partir des données d'abonnement à des services stockées par le courtier en services lui-même.

4. Procédé de déclenchement de services selon la revendication 3, le procédé comprenant en outre :
la mise à jour, par le courtier en services, des données d'abonnement à des services stockées ; et
l'interrogation, par le courtier en services, des données d'abonnement à des services de l'abonné appelé de l'appel en fonction des informations sur l'abonné appelé contenues dans l'appel comprenant :
l'interrogation, par le courtier en services, des données d'abonnement à des services de l'abonné appelé à partir des données d'abonnement à des services stockées et mises à jour en fonction des informations sur l'abonné appelé contenues dans l'appel.

5. Courtier en services, comprenant
un module d'interrogation (61), configuré pour interroger des données d'abonnement à des services d'un abonné appelé d'un appel en fonction d'informations sur l'abonné appelé contenues dans l'appel lorsque l'appel déclenché à partir d'un terminal appelant est acheminé vers un terminal appelé, **caractérisé par le fait qu'**il comprend :
le module d'interrogation (61), configuré en outre pour obtenir un service non déclenché dans des services auxquels l'abonné appelé a souscrit ; et
un module d'obtention de clé de service (63), configuré pour obtenir une clé de service à partir de l'appel ;
un module de recherche de commutateur (64), configuré pour trouver, en fonction de la clé de service, un commutateur de dérivation d'appel correspondant qui est utilisé pour indiquer s'il faut dériver un appel ou non, à partir d'informations de configuration de service ;
un module de déclenchement (62), configuré pour générer un nouvel appel pour déclencher le service non déclenché, le nouvel appel étant acheminé vers un ou plusieurs terminaux auxquels le service non déclenché est lié ;
le module de déclenchement (62) étant configuré spécifiquement pour générer le nouvel appel sous réserve que le commutateur de dérivation d'appel indique que l'appel doit être dérivé.

6. Courtier en services selon la revendication 5, le module d'interrogation (61) étant configuré spécifiquement pour interroger les données d'abonnement à des services de l'abonné appelé à partir d'un serveur d'abonné domestique en fonction des informations sur l'abonné appelé contenues dans l'appel.

7. Courtier en services selon la revendication 5, le module d'interrogation (61) étant configuré spécifiquement pour interroger, en fonction des informations sur l'abonné appelé contenues dans l'appel, les données d'abonnement à des services de l'abonné appelé à partir des données d'abonnement à des services stockées par le module d'interrogation (61) lui-même.

8. Courtier en services selon la revendication 7, comprenant en outre :
un module de mise à jour (65), configuré pour mettre à jour les données d'abonnement à des services stockées ;
le module d'interrogation (61) étant configuré spécifiquement pour interroger les données d'abonnement à des services de l'abonné appelé à partir des données d'abonnement de service stockées et mises à jour en fonction des informations sur l'abonné appelé contenues dans l'appel.

9. Système de déclenchement de services, comprenant le courtier en services (81) selon l'une quelconque des revendications 5 à 8.
